# EUROPÄISCHE PATENTSCHRIFT

(11) **EP 3 371 738 B1**
(45) Veröffentlichungstag und Bekanntmachung des Hinweises auf die Patenterteilung: **28.05.2025**
(21) Anmeldenummer: 16770747.0
(22) Anmeldetag: 22.09.2016
(51) Int. Cl.: G06V 20/59, G06V 40/16, B60R 21/015

(54) **VERFAHREN UND VORRICHTUNG ZUM BEREITSTELLEN EINER INSASSENINFORMATION FÜR EINE SICHERHEITSEINRICHTUNG FÜR EIN FAHRZEUG**
METHOD AND APPARATUS FOR PROVIDING OCCUPANT INFORMATION FOR A SAFETY DEVICE FOR A VEHICLE
PROCÉDÉ ET DISPOSITIF POUR FOURNIR DES INFORMATIONS PASSAGER À UN DISPOSITIF DE SÉCURITÉ, DESTINÉ À UN VÉHICULE

(30) Priorität: 03.11.2015 DE 102015221520
(43) Veröffentlichungstag der Anmeldung: 12.09.2018
(73) Patentinhaber: Robert Bosch GmbH, 70442 Stuttgart (DE)
(72) Erfinder: FREIENSTEIN, Heiko, 71263 Weil der Stadt (DE); D'ADDETTA, Gian Antonio, 70563 Stuttgart (DE); KOLATSCHEK, Josef, 71263 Weil der Stadt (DE)
(86) Internationale Anmeldenummer: PCT/EP2016/072584
(87) Internationale Veröffentlichungsnummer: WO 2017/076549

(56) Entgegenhaltungen:
- WO-A2-02/08023
- US-A1- 2001 029 416
- US-A1- 2012 170 817
- US-B1- 6 198 996
- KANNALA J ET AL: "A generic camera calibration method for fish-eye lenses", PATTERN RECOGNITION, 2004. ICPR 2004. PROCEEDINGS OF THE 17TH INTERNAT IONAL CONFERENCE ON CAMBRIDGE, UK AUG. 23-26, 2004, PISCATAWAY, NJ, USA,IEEE, LOS ALAMITOS, CA, USA, vol. 1, 23 August 2004 (2004-08-23), pages 10 - 13, XP010724135, ISBN: 978-0-7695-2128-2, DOI: 10.1109/ICPR.2004.1333993
- BRAUER-BURCHARDT C ET AL: "A new algorithm to correct fish-eye- and strong wide-angle lens-distortion from single images", PROCEEDINGS 2001 INTERNATIONAL CONFERENCE ON IMAGE PROCESSING. ICIP 2001 - THESSALONIKI, GREECE, OCT. 7 - 10, 2001; [INTERNATIONAL CONFERENCE ON IMAGE PROCESSING], INSTITUTE OF ELECTRICAL AND ELECTRONICS ENGINEERS, NEW YORK, NY, vol. 1, 7 October 2001 (2001-10-07), pages 225 - 228, XP010564837, ISBN: 978-0-7803-6725-8, DOI: 10.1109/ICIP.2001.958994
- PATEL VISHAL M ET AL: "Cancelable Biometrics: A review", IEEE SIGNAL PROCESSING MAGAZINE, IEEE, USA, vol. 32, no. 5, 1 September 2015 (2015-09-01), pages 54 - 65, XP011666150, ISSN: 1053-5888, [retrieved on 20150812], DOI: 10.1109/MSP.2015.2434151

## Beschreibung

### Stand der Technik

Die Erfindung geht aus von einer Vorrichtung oder einem Verfahren nach Gattung der unabhängigen Ansprüche. Gegenstand der vorliegenden Erfindung ist auch ein Computerprogramm.

Insassensysteme von Fahrzeugen, wie Airbags oder Sicherheitsgurte wenden in den meisten Fällen keine Anpassung im Hinblick auf individuelle Insassenparameter wie Alter, Gewicht oder Geschlecht an.

US2012170817A1 offenbart ein Fahrzeugkontrollsystem welches sich anpasst im Hinblick auf individuelle Insassenparameter.

Die US 6 198 996 B1 offenbart ein Verfahren zum Autorisieren eines Anwenders, beispielsweise unter Verwendung einer Kamera eines Fahrzeugs.

Die Schrift BRAUER-BURCHARDT C ET AL: "A new algorithm to correct fish-eyeand strong wide-angle lens-distortion from single images", PROCEEDINGS 2001 INTERNATIONAL CONFERENCE ON IMAGE PROCESSING, Bd. 1,7. Oktober 2001 (2001-10-07), Seiten 225-228, XP010564837, D0I: 10.1109/ICIP.2001.958994, ISBN: 978-0-7803-6725-8 befasst sich mit einem Algorithmus zur Bildkorrektur.

Die Schrift PATEL VISHAL MET AL: "Cancelable Biometrics: A review", IEEE SIGNAL PROCESSING MAGAZINE, Bd. 32, Nr. 5, September 2015, Seiten 54-65, XP011666150, ISSN: 1053-5888, DOI: 10.11 09/MSP.2015.2434151 befasst sich mit der Verwendung von biometrischen Merkmalen.

### Offenbarung der Erfindung

Vor diesem Hintergrund werden mit dem hier vorgestellten Ansatz ein Verfahren zum Bereitstellen einer Insasseninformation für eine Sicherheitseinrichtung für ein Fahrzeug, weiterhin eine Vorrichtung, die dieses Verfahren verwendet, sowie schließlich ein entsprechendes Computerprogramm gemäß den Hauptansprüchen vorgestellt. Durch die in den abhängigen Ansprüchen aufgeführten Maßnahmen sind vorteilhafte Weiterbildungen und Verbesserungen der im unabhängigen Anspruch angegebenen Vorrichtung möglich.

Durch eine geeignete Plausibilisierung von Bilddaten einer Bilderfassungseinrichtung des Fahrzeugs können plausible Insasseninformationen bezüglich eines von der Bilderfassungseinrichtung des Fahrzeugs erfassten Insassen bereitgestellt werden, die von einer Sicherheitseinrichtung oder Assistenzsystem des Fahrzeugs verwendet werden können, um eine Sicherheitsfunktion oder Assistenzfunktion an den Insassen anzupassen.

Ein Verfahren zum Bereitstellen einer Insasseninformation für eine Sicherheitseinrichtung für ein Fahrzeug umfasst die folgenden Schritte:
Einlesen von einen Insassen des Fahrzeugs repräsentierenden Bilddaten über eine Schnittstelle zu einer Bilderfassungseinrichtung des Fahrzeugs;
Einlesen von eine Person repräsentierenden Plausibilisierungsdaten über eine Schnittstelle zu einem mobilen Gerät;
Bestimmen von den Insassen charakterisierenden Insassendaten unter Verwendung der Bilddaten und der Plausibilisierungsdaten; und
Bereitstellen der Insassendaten an eine Schnittstelle zu der Sicherheitseinrichtung für das Fahrzeug.

Die den Insassen repräsentierenden Bilddaten können ein den Insassen abbildendes und von der Bilderfassungseinrichtung erfasstes Bild darstellen. Die Bilderfassungseinrichtung kann eine im Betrieb der Bilderfassungseinrichtung fest in dem Fahrzeug installierte Bilderfassungseinrichtung darstellen. Beispielsweise kann es sich bei der Bilderfassungseinrichtung um eine Kamera handeln. Das mobile Gerät kann beispielsweise ein Smartphone darstellen. Das mobile Gerät kann von der Person mitgeführt werden. Die Plausibilisierungsdaten können in dem mobilen Gerät gespeicherte Daten oder von dem mobilen Gerät erzeugte Daten darstellen. Beispielsweise kann das mobile Gerät ausgebildet sein, um die Plausibilisierungsdaten unter Verwendung eines von einer Kamera des mobilen Geräts erfassten Bildes der Person oder eines auf dem mobilen Gerät abgespeicherten Bild der Person zu erzeugen. Die Insassendaten werden nach einer erfolgreichen Plausibilisierung der Bilddaten durch die Plausibilisierungsdaten, oder umgekehrt, unter Verwendung der Bilddaten und/oder der Plausibilisierungsdaten bestimmt.

Dabei wird die Plausibilisierung erfolgreich sein, wenn die Person mit dem Insassen übereinstimmt. Die Insassendaten können beispielsweise eine Information über ein Alter, ein Gewicht oder ein Geschlecht des Insassen umfassen. Der Datenspeicher kann Teil eines Systems mit Datenspeicher sein, welches im Fahrzeug vorhanden sein kann. Hier wäre z.B. eine Car-Multimedia-Head-Unit als Beispiel zu nennen.

Im Schritt des Einlesens der Plausibilisierungsdaten können eine weitere Person repräsentierende weitere Plausibilisierungsdaten über die Schnittstelle zu dem mobilen Gerät eingelesen werden. Im Schritt des Bestimmens können die Insassendaten ferner unter Verwendung der weiteren Plausibilisierungsdaten bestimmt werden. Auf diese Weise können Plausibilisierungsdaten zweier unterschiedlicher Personen zum Plausibilisieren der von der Bilderfassung des Fahrzeugs bereitgestellten Bilddaten von ein und demselben mobilen Gerät bereitgestellt werden. Bei den unterschiedlichen Personen kann es sich um Personen handeln, die sich eine Nutzung des mobilen Geräts teilen oder die sich erfahrungsgemäß häufig gemeinsam in der Nähe des mobilen Geräts befinden. Dies trifft beispielsweise bei einem Smartphone eines ein Kind mitführenden Elternteils zu.

Das Verfahren umfasst einen Schritt des Anforderns eine weitere Person repräsentierender weiterer Plausibilisierungsdaten umfassen, wenn im Schritt des Bestimmens die Insassendaten unter Verwendung der Bilddaten und der Plausibilisierungsdaten nicht bestimmt werden können. In diesem Fall kann das Verfahren einen wiederholten Schritt des Bestimmens der Insassendaten unter Verwendung der weiteren Plausibilisierungsdaten umfassen. Das die Insassendaten nicht bestimmt werden können, kann beispielsweise daraus resultieren, dass eine Plausibilisierung der Bilddaten unter Verwendung der Plausibilisierungsdaten nicht erfolgreich ist, weil es sich bei dem Insassen und der Person um unterschiedliche Personen handelt. In diesem Fall können die weiteren Plausibilisierungsdaten von der Person angefordert werden, der die Plausibilisierungsdaten zugeordnet sind. Dies ist vorteilhaft, da aufgrund der eingelesenen Plausibilisierungsdaten mit Sicherheit davon ausgegangen werden kann, dass sich die Person, deren Plausibilisierungsdaten eingelesen wurden, im Fahrzeug befindet und somit eine Aussage über den von der Bilderfassungseinrichtung des Fahrzeugs erfassten Insassen machen kann.

Das Verfahren kann einen Schritt des Anpassens der Sicherheitseinrichtung unter Verwendung der Insassendaten umfassen. Beispielsweise kann eine Gurtkraft eines Sicherheitsgurtes oder ein Innendruck eines Airbags unter Verwendung der Insassendaten angepasst werden. Auch kann eine eine Nutzung der Sicherheitseinrichtung betreffende Anzeige einer Anzeigeeinrichtung, beispielsweise ein ein Kind oder einen Erwachsenen darstellendes Piktogramm, unter Verwendung der Insassendaten angepasst werden.

Das Verfahren kann einen Schritt des Ermittelns der Plausibilisierungsdaten unter Verwendung einer die Person repräsentierenden Aufnahme umfassen. Die Aufnahme kann in dem mobilen Gerät gespeichert oder aktuell unter Verwendung einer Bilderfassungseinrichtung des mobilen Geräts erfasst worden sein. Eine aktuelle Erfassung der Aufnahme hat den Vorteil, dass mit einer hohen Wahrscheinlichkeit davon ausgegangen werden kann, dass die Aufnahme der das mobile Gerät aktuell mitführenden Person zugeordnet ist.

Dabei kann im Schritt des Ermittelns die die Person repräsentierende Aufnahme unter Verwendung einer Charakteristik der Bilderfassungseinrichtung normalisiert werden, um die Plausibilisierungsdaten als normalisierte Bilddaten zu ermitteln. Dies hat den Vorteil, dass die von dem mobilen Gerät und der Bilderfassungseinrichtung des Fahrzeugs empfangenen Daten einer gemeinsamen Bildverarbeitung zugeführt werden können.

Auch können im Schritt des Ermittelns Parameter der normalisierten Aufnahme als die die Plausibilisierungsdaten ermittelt werden. Auf diese Weise ist es nicht erforderlich, die Aufnahme oder normalisierte Aufnahme selbst an eine das Verfahren umsetzende Vorrichtung zu übermitteln.

Dieses Verfahren kann beispielsweise in Software oder Hardware oder in einer Mischform aus Software und Hardware beispielsweise in einer Vorrichtung implementiert sein.

Der hier vorgestellte Ansatz schafft somit ferner eine Vorrichtung, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form einer Vorrichtung kann die der Erfindung zugrunde liegende Aufgabe schnell und effizient gelöst werden. Unter einer Vorrichtung kann vorliegend ein elektrisches Gerät verstanden werden, das Sensorsignale verarbeitet und in Abhängigkeit davon Steuer- und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Ausführungsbeispiele der Erfindung sind in den Zeichnungen dargestellt und in der nachfolgenden Beschreibung näher erläutert. Es zeigt:
Fig. 1 eine schematische Darstellung eines Systems mit einer Vorrichtung zum Bereitstellen einer Insasseninformation gemäß einem Ausführungsbeispiel;
Fig. 2 ein Ablaufdiagramm eines Verfahrens zum Bereitstellen einer Insasseninformation gemäß einem Ausführungsbeispiel;
Fig. 3 eine Darstellung eines Systems mit einer Vorrichtung gemäß einem Ausführungsbeispiel;
Fig. 4 ein mobiles Gerät gemäß einem Ausführungsbeispiel;
Fig. 5 eine Darstellung von Strategien gemäß Ausführungsbeispielen
Fig. 6 ein Ablaufdiagramm eines Verfahrens gemäß einem Ausführungsbeispiel;
Fig. 7 ein Ablaufdiagramm eines Verfahrens gemäß einem Ausführungsbeispiel;
Fig. 8 eine Darstellung von Reflektanzeigenschaften menschlicher Hauttypen gemäß einem Ausführungsbeispiel;
Fig. 9 eine Darstellung von geometrischen Verzerrungen unterschiedlicher Kameramodelle gemäß einem Ausführungsbeispiel; und
Fig. 10 ein Ablaufdiagramm eines Verfahrens gemäß einem Ausführungsbeispiel.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

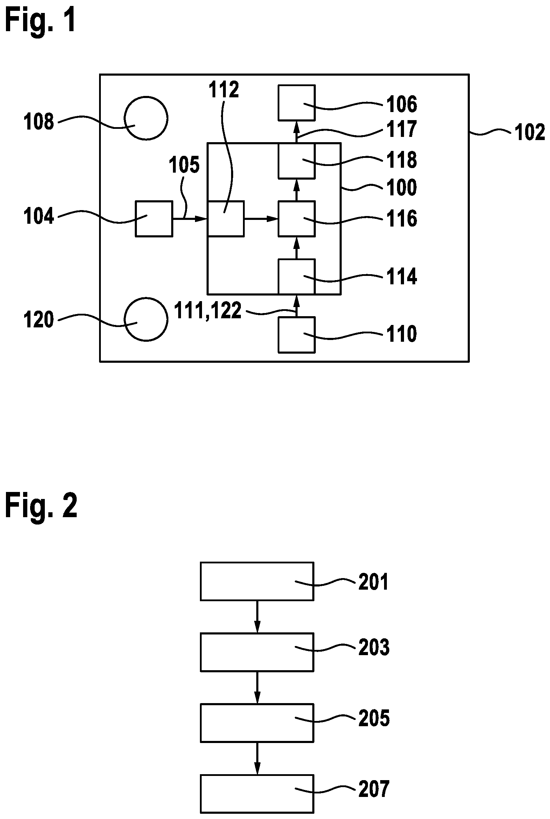

Fig. 1 zeigt eine schematische Darstellung eines Systems mit einer Vorrichtung 100 zum Bereitstellen einer Insasseninformation gemäß einem Ausführungsbeispiel. Gemäß diesem Ausführungsbeispiel ist die Vorrichtung 100 in ein Fahrzeug 102 integriert. Das Fahrzeug 102 weist ferner eine Bilderfassungseinrichtung 104, beispielsweise eine Kamera und eine Sicherheitseinrichtung 106, beispielsweise einen Sicherheitsgurt oder einen Airbag zum Schützen eines Insassen 108 des Fahrzeugs 102 auf. In dem Fahrzeug 102 ist ferner ein mobiles Gerät 110, beispielsweise ein Smartphone des Insassen 108 angeordnet. Das mobile Gerät 110 kann zusammen mit dem Insassen 108 in das Fahrzeug 102 gelangt sein und von dem Insassen 108 bei Verlassen des Fahrzeugs 102 wieder aus dem Fahrzeug 102 entfernt werden. Gemäß einem Ausführungsbeispiel handelt es sich bei der Einrichtung 110 um einen Datenspeicher eines im Fahrzeug 102 vorhandenen Systems, wie einer Multimediaeinheit.

Die Bilderfassungseinrichtung 104 ist ausgebildet, um ein Bild des Insassen 108 zu erfassen und das Bild repräsentierende Bilddaten 105 über eine Schnittstelle an die Vorrichtung 100 bereitzustellen. Zum Einlesen der Bilddaten 105 weist die Vorrichtung 100 eine erste Einleseeinrichtung 112 auf.

Das mobile Gerät 110 ist ausgebildet, um den Insassen 108 repräsentierende Plausibilisierungsdaten 111 über eine Schnittstelle an die Vorrichtung 100 bereitzustellen. Zum Einlesen der Plausibilisierungsdaten 111 weist die Vorrichtung 100 eine zweite Einleseeinrichtung 114 auf.

Die Vorrichtung 100 weist ferner eine Bestimmungseinrichtung 116 auf, die ausgebildet ist, um den Insassen 108 charakterisierende Insassendaten 117 unter Verwendung der von den Einleseeinrichtungen 112, 114 eingelesenen Bilddaten 105 und Plausibilisierungsdaten 111 zu bestimmen. Gemäß einem Ausführungsbeispiel ist die Bestimmungseinrichtung 116 ausgebildet, um die Insassendaten 117 aus den Bilddaten 105 und/oder den Plausibilisierungsdaten 111 zu bestimmen, wenn die Bilddaten 105 durch die Plausibilisierungsdaten 111 plausibilisiert werden können. In dem gezeigten Ausführungsbeispiel ist eine solche Plausibilisierung möglich, da die Plausibilisierungsdaten 111 und die Bilddaten 105 der gleichen Person, nämlich dem Insassen 108, zugeordnet sind. Die Vorrichtung 100 weist eine Bereitstellungseinrichtung 118 auf, die ausgebildet ist, um die von der Bestimmungseinrichtung 116 bestimmten Insassendaten 117, die beispielsweise eine Information über ein Gewicht, ein Alter, eine Größe oder ein Geschlecht des Insassen 108 umfassen, an eine Schnittstelle zu der Sicherheitseinrichtung 106 bereitzustellen. Die Sicherheitseinrichtung 106 ist ausgebildet, um unter Verwendung der Insassendaten 117 eine Funktionalität der Sicherheitseinrichtung 106 an den Insassen 108 anzupassen.

Sind die von dem mobilen Gerät 110 bereitgestellten Plausibilisierungsdaten 111 einer anderen Person, beispielsweise einem weiteren Insassen 120 des Fahrzeugs 102 zugeordnet, so können die von der Kamera 104 eingelesenen Bilddaten 105 nicht durch die Plausibilisierungsdaten 111 plausibilisiert werden. Gemäß einem Ausführungsbeispiel werden in einem solchen Fall keine Insassendaten 117 oder es werden beispielsweise Standardinsassendaten an die Sicherheitseinrichtung 106 bereitgestellt.

Gemäß einem Ausführungsbeispiel wird das mobile Gerät 110 von dem weiteren Insassen 120 verwendet und weist daher dem Insassen 120 zugeordnete Plausibilisierungsdaten 111 auf. In einem solchen Fall, bei der Bilddaten 105 und Plausibilisierungsdaten 111 unterschiedlichen Personen 108, 120 zugeordnet sind, ist die Vorrichtung 100 ausgebildet, um von der Person 120, der die Plausibilisierungsdaten 111 zugeordnet sind, weitere Plausibilisierungsdaten 122 anzufordern, die geeignet sind, um die Person 108, der die Bilddaten 105 der Bilderfassungseinrichtung 104 zugeordnet sind, plausibilisieren zu können. Die zweite Einleseeinrichtung 114 kann in diesem Fall ausgebildet sein, um die weiteren Plausibilisierungsdaten 122 einzulesen und an die Bestimmungseinrichtung 116 zur Bestimmung der Insassendaten 117 bereitzustellen.

Gemäß einem Ausführungsbeispiel ist das mobile Gerät 110 ausgebildet, um zwei oder mehr Plausibilisierungsdaten 111, 122 bereitzustellen, die unterschiedlichen Personen zugeordnet sind. Beispielsweise ist das mobile Gerät 110 ausgebildet, um dem Insassen 108 zugeordnete Plausibilisierungsdaten 111 und dem weiteren Insassen 120 zugeordnete weitere Plausibilisierungsdaten 122 bereitzustellen. Die zweite Einleseeinrichtung 114 ist ausgebildet, um die den Insassen 108, 120 zugeordneten Plausibilisierungsdaten 111, 122 einzulesen und an die Bestimmungseinrichtung 116 bereitzustellen. Die Bestimmungseinrichtung 116 ist ausgebildet, um unter Verwendung der Bilddaten 105 der Bilderfassungseinrichtung 104 sowie den Plausibilisierungsdaten 111 und den weiteren Plausibilisierungsdaten 122 die dem von der Bilderfassungseinrichtung 104 erfassten Insassen 108 zugeordneten Insassendaten 117 zu bestimmen. Dies ist möglich, sofern die Plausibilisierungsdaten 111 oder die weiteren Plausibilisierungsdaten 122 dem Insassen 108 zugeordnet sind und somit zur Plausibilisierung der Bilddaten 105 verwendet werden können.

Der beschriebene Ansatz ermöglicht eine zusätzliche Funktionalität eines sogenannten Mob2Car (mobiles Gerät 110 - zu - Fahrzeug 102) Systems in einem sogenannten Tandemmodus.

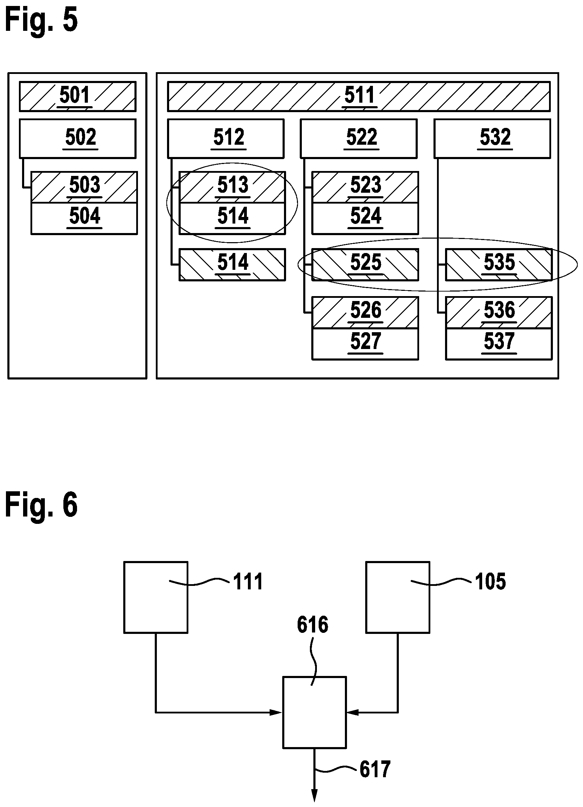

Gemäß einem Ausführungsbeispiel wird dazu ein Verfahren zum Einloggen von mehr als einer Person 108, 120 mit einem einzigen mobilen Gerät 110 realisiert, wie beispielsweise Mutter und Kind oder Betreuer und betreute Person. Dieser Ansatz ermöglicht es Mob2Car einige Anforderungen des FMVSS 208 zu erfüllen, wie es nachfolgend anhand von Fig. 5 gezeigt ist. Der Ansatz stellt gemäß einem Ausführungsbeispiel einen wichtigen Baustein der Mob2Car Herangehensweise dar.

Mob2Car ermöglicht es dabei, die passive Sicherheit durch Nutzung des mobilen Kommunikationsgeräts 110 zu erhöhen. Mob2Car verfolgt dabei die im folgenden genannten Ziele und Arbeitsansätze.

Insassenschutzsysteme 106, wie Airbags und Sicherheitsgurte wenden in den meisten Fällen keine Anpassung im Hinblick auf individuelle Insassenparameter (Alter, Gewicht, Geschlecht) an. Um jeden individuellen Insassen besser zu schützen, sind Anpassungen von Beschränkungsparametern erforderlich. Eine individuelle Sicherheitsanpassung erfordert robuste Sensoren und/oder Verfahren zum Erkennen von Fahrzeuginsassen 108, 122. Die entsprechende offensichtliche Klassifikationsaufgabe erfordert hoch entwickelte Innenraumsensoren 104 und verursacht einen hohen Aufwand. Der neue mob2car Ansatz verwendet natürliche Daten 111 eines Anwenders 108 (Smartphone 110, App-basiert) und übermittelt diese zu dem Fahrzeug 102. Dort wird basierend auf einem Bild des Anwenders 108, das zusätzlich übermittelt wird, ein Plausibilitätsscheck durchgeführt, in dem beispielsweise überprüft wird, ob die Person 108, die in dem Fahrzeug 102 sitzt, zu den übermittelten Daten 111 passt.

Dabei gibt es zwei wichtige Designbeschränkungen. Zum einen ist Ausfallsicherheit erforderlich. In jedem Fall soll zumindest Schutz gemäß der aktuellen Technik garantiert werden. Zum anderen ist Datenschutz erforderlich. Das System wird derart gestaltet, dass kein Erfordernis dazu besteht, personalisierte Anwenderdaten in dem Fahrzeug 102, beispielsweise einem Leihfahrzeug oder einem Flottenfahrzeug, zu speichern.

Fig. 2 zeigt ein Ablaufdiagramm eines Verfahrens zum Bereitstellen einer Insasseninformation gemäß einem Ausführungsbeispiel. Das Verfahren kann beispielsweise unter Verwendung der anhand von Fig. 1 beschriebenen Vorrichtung ausgeführt werden.

In einem Schritt 201 werden von einer Bilderfassungseinrichtung des Fahrzeugs erfasste Bilddaten eines Insassen des Fahrzeugs und in einem Schritt 203 werden eine Person repräsentierende Plausibilisierungsdaten über eine Schnittstelle zu einem mobilen Gerät empfangen. Die Schritte 201, 203 können zeitlich parallel oder zeitlich nacheinander durchgeführt werden. Beispielsweise können die Schritte 201, 203 beim Starten des Fahrzeugs oder wenn eine Person in dem Fahrzeug Platz nimmt durchgeführt werden.

In einem Schritt 205 werden die Bilddaten und die Plausibilisierungsdaten zur gegenseitigen oder einseitigen Plausibilisierung verwendet, beispielsweise indem die Daten miteinander verglichen werden. Auf diese Weise kann festgestellt werden, ob es sich bei der Person, der die Plausibilierungsdaten zugeordnet sind um den Insassen handelt. Ist dies der Fall, so werden die Insassendaten basierend auf den Bilddaten und zusätzlich oder alternativ basierend auf den Plausibilierungsdaten bestimmt. In einem Schritt 207 werden die Insassendaten an eine Schnittstelle zu der Sicherheitseinrichtung des Fahrzeugs bereitgestellt.

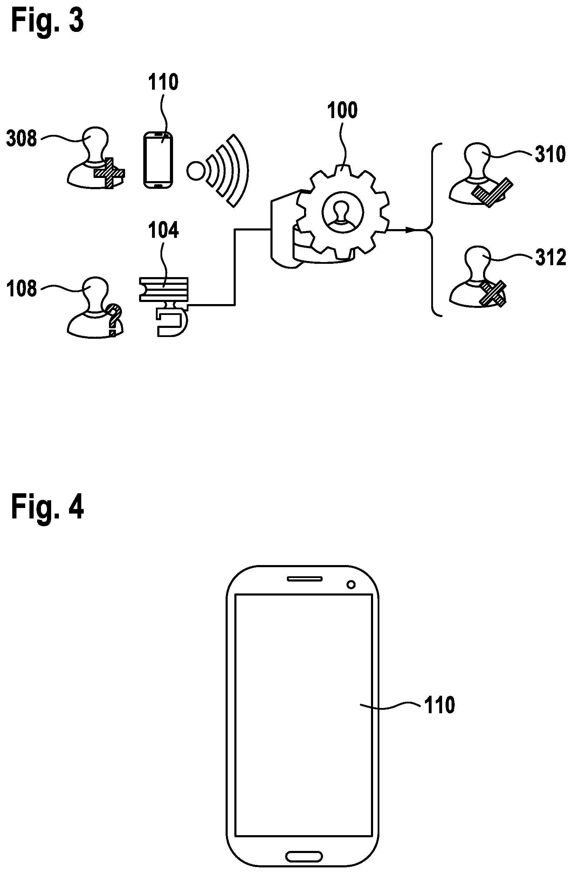

Fig. 3 zeigt eine Darstellung eines Systems mit einer Vorrichtung 100 gemäß einem Ausführungsbeispiel. Das System zeigt einen allgemeinen Aufbau von Mob2Car. Die Vorrichtung 100 ist ausgebildet, um von einer Bilderfassungseinrichtung 104 erfasste Bilddaten einer ersten Person 108 über eine drahtgebundene Schnittstelle zu empfangen und von einem mobilen Gerät 110 Plausibilisierungsdaten bezüglich einer zweiten Person 308 über eine drahtlose Schnittstelle zu empfangen. Die Vorrichtung 100 ist ausgebildet, um unter Verwendung der Bilddaten und der Plausibilisierungsdaten zu bestimmen, ob es sich bei den Personen 108, 308, um dieselbe Person, dargestellt durch das Piktogramm 310, oder um unterschiedliche Personen, dargestellt durch das Piktogramm 312, handelt.

Fig. 4 zeigt ein mobiles Gerät 110 gemäß einem Ausführungsbeispiel. Dabei kann es sich um eine größere Darstellung des in Fig. 3 gezeigten mobilen Geräts handeln, das gemäß diesem Ausführungsbeispiel als ein Smartphone ausgeführt ist.

Fig. 5 zeigt eine Darstellung von Strategien gemäß Ausführungsbeispielen.

Der Block 501 steht dafür, dass keine FMVSS 208 Test Anforderungen bestehen. Der Block 502 stellt den Fall dar, dass ein Sitz leer ist. Der Block 503 stellt eine Unterdrückung und der Block 504 eine Gegenwart (engl. presence) dar.

Der Block 511 steht dafür, dass FMVSS 208 Test Anforderungen zum Minimieren des Risikos für Babys, Kinder und andere Insassen vor durch Airbags hervorgerufene Verletzungen bestehen. Der Block 512 stellt den Fall dar, dass ein Babysitz mit einem 1 Jahr altem Dummy besetzt ist. Der Block 513 stellt eine Unterdrückung und der Block 514 eine Gegenwart dar. Der Block 515 stellt eine Entfaltung eines geringen Risikos dar. Der Block 522 stellt den Fall von 3 und 6 Jahre alten Kinder-Dummys dar. Der Block 523 stellt eine Unterdrückung und der Block 524 eine Gegenwart dar. Der Block 525 stellt eine Entfaltung eines geringen Risikos dar Der Block 526 stellt eine Unterdrückung und der Block 527 einen Zustand "OOP" dar. Der Block 532 stellt den Fall eines "5th %ile adult femal dummy" in der Fahrerposition dar. Der Block 535 stellt eine Entfaltung eines geringen Risikos dar. Der Block 536 stellt eine Unterdrückung und der Block 537 einen Zustand "OOP" dar.

Der beschriebene Ansatz nutzt eine videobasierte Innenraumsensierung für eine Insassenklassifikation und eine Fehlpositionserkennung.

Der sogenannte Tandemmodus ermöglicht ein Verfahren zum Einloggen von mehr als einer Person mit einem einzigen mobilen Gerät. Dabei kann es sich beispielsweise um ein Elternteil und ein Kind oder einen Betreuer und eine betreute Person handeln.

Dieser Ansatz ermöglicht es, das Mob2Car bestimmte FMVSS 208 Anforderungen erfüllt. Dies wird beispielhaft an der Anwendung "Elternteil / Kind" beschrieben.

Ein Elternteil mit einem kleinen Kind gibt sowohl seine eigenen Daten (Gewicht, Alter, Geschlecht) und ein Bild oder biometrische Daten als auch die Daten und optional ein Bild oder biometrische Daten seines Kindes (Gewicht, Alter, Geschlecht, Kindersitztyp) ein. Dies ist eine anfängliche Aktion. Die Daten bleiben in dem mobilen Gerät.

Wenn das Elternteil in das Fahrzeug steigt, übermittelt das mobile Gerät beide Datensätze. Die Plausibilisierung und und Zuordnung zu den Sitzen kann durch das im Fahrzeug angeordnete System, entsprechend einem Mob2Car-Konzept durchgeführt werden, durch einen Vergleich der biometrischen Daten von dem mobilen Gerät und verfügbaren Daten. Wenn die Zuordnung und Plausibilisierung erfolgreich ist, kann ein anpassbares Airbagsystem eingestellt werden.

In einem ersten Schritt könnte dies eine Anpassung der hybriden Unterdrückung/ Entfaltung einer geringen Risikos Strategie sein, wie es durch die Blöcke 513, 514 sowie 525, 535 dargestellt ist.

Somit zeigt Fig. 5 unterschiedliche Strategien, die durch FMVSS 208 erlaubt sind. So können, in der Realität und unter Berücksichtigung von realen Unfallsituationen, Systeme zum Insassenschutz auf unterschiedlichen Schutzoptionen basieren, beispielsweise einer "statischen Unterdrückungsoption" für die 1 YOC Klasse und LRD (Entfaltung eines geringen Risikos) für die 3 YOC und 6 YOC Klassen auf der Passagierseite und für die 5PFD Klasse auf der Fahrerseite. Für diesen Fall sind geeignete Sensoren zur Insassenklassifikation erforderlich, um die 1 YOC Klasse zu erkennen.

Für den Fall, dass biometrische Daten zur Plausibilisierung des Kindes nicht verfügbar sind, kann der Elternteil über eine Mensch-Maschine-Schnittstelle (HMI) adressiert werden, um die Daten und den Sitztyp (rückwärtsgewandter Kindersitz, etc.) über eine Tastatur oder durch Drücken eines Knopfes oder eines berührungsempfindlichen Bildschirms, etc. zu bestätigen. Zusätzlich oder alternativ sind weitere Plausibilisierungsverfahren möglich.

Gemäß einem Ausführungsbeispiel ist es vorteilhaft weitere Informationen zu haben, beispielsweise ein klares Piktogramm, das dem Typ des Kindersitzes zugeordnet ist, oder die Information, dass das Beifahrersicherheitssystem (Beifahrerseite) nun optimal für ein Kind aber nicht für einen Erwachsenenschutz eingestellt ist, oder einen Hinweis, dass der Sitz und eine richtige Verwendung des Gurtes Pflicht sind.

Zusätzliche Plausibilisierungen und Prozeduren können in den Ansatz integriert werden, um die Klassifikation eines Kindes zu unterstützen.

Beispielsweise kann eine Plausibilisierung durch Rückwärtslogik durchgeführt werden. Wenn ein Erwachsener auf einem Beifahrersitz erkannt wird, wird das System nicht automatisch an einen Kindersitz angepasst. In diesem Fall kann eine Interaktion über eine Mensch-Maschine-Schnittstelle vorgesehen werden.

Alternativ kann für das Beispiel einer Rückwärtslogik angenommen werden, dass für den Fall, dass kein Erwachsener in der Kopfbox erkannt wird, die Kinder-Hypothese wahrscheinlicher ist.

Auch kann eine Plausibilisierung durch eine Zeitablaufoption erfolgen. Wenn der Eintrag in dem mobilen Gerät, der zur Bereitstellung der Plausibilisierungsdaten verwendet wird oder der die Plausibilisierungsdaten darstellt, älter als eine bestimmte Zeitdauer ist, die von dem Sitztyp abhängt (beispielsweise drei Monate für einen Babysitz, sechs Monate für einen Kindersitz) erfordert das System ein Update in dem mobilen Gerät oder eine Freigabebestätigung. Für diesen Fall können die Plausibilisierungsdaten einen Zeitstempel umfassen, der einen Erstellungszeitpunkt der Plausibilisierungsdaten anzeigt, und eine Information über den Sitztyp umfassen, der von der Person verwendet wird, der die Plausibilisierungsdaten zugeordnet sind. Eine Überprüfung des Eintrags und/oder das Update oder die Freigabebestätigung kann, sofern erforderlich, von dem mobilen Gerät oder beispielsweise von der in Fig. 1 gezeigten Vorrichtung angefordert werden.

Fig. 6 zeigt ein Ablaufdiagramm eines Verfahrens gemäß einem Ausführungsbeispiel. Das Verfahren ermöglicht gemäß einem Ausführungsbeispiel eine Bild- und Farbnormalisierung und zusätzlich oder alternativ eine anonyme Übertragung von Bildern, die für eine Plausibilitätsüberprüfung benötigt werden.

Dabei wird ein Normalisierungsverfahren verwendet, um von einem mobilen Gerät, beispielsweise einem Smartphone übermittelte Bilddaten zu normalisieren und zu anonymisieren.

Bei dem im vorangegangenen skizzierten Konzept Mob2Car werden in der Hauptausprägung die Kamerabilder von Personen zur Plausibilisierung herangezogen, also verglichen. Diese Bilder werden mit unterschiedlichen Kamerasystemen aufgezeichnet.

Die Darstellung in Fig. 6 zeigt eine erste Aufnahme 111 eines ersten Geräts, auch Gerät oder System (A) genannt, und eine zweite Aufnahme 105 eines zweiten Geräts, auch Gerät oder System (B) genannt. Die anhand von Fig. 1 beschriebenen Plausibilisierungsdaten können die erste Aufnahme 111 umfassen. Somit kann es sich bei dem ersten Gerät um das in Fig. 1 gezeigte mobile Gerät handeln. Die anhand von Fig. 1 beschriebenen Bilddaten können die zweite Aufnahme 105 umfassen. Somit kann es sich bei dem zweiten Gerät um die in Fig. 1 gezeigte Bilderfassungseinrichtung handeln. Die Aufnahmen 105, 111 werden an einen Block 616 übertragen, in dem ein Vergleich durch einen Bildverarbeitungs-Algorithmus des zweiten Geräts durchgeführt wird. Eine Übertragung der ersten Aufnahme 111 erfolgt dabei über eine Schnittstelle. Ein Ergebnis 617 des Vergleichs wird von dem Block 616 ausgegeben.

Wenn das Ergebnis 617 anzeigt, dass die Aufnahmen 105, 111 dieselbe Person abbilden, so kann das Ergebnis 617 von der in Fig. 1 gezeigten Bestimmungseinrichtung verwendet werden, um Insassendaten bezüglich dieser Person zu bestimmen. Gemäß einem Ausführungsbeispiel ist der Block 616 Teil der anhand von Fig. 1 beschriebenen Bestimmungseinrichtung.

In Abhängigkeit verschiedener Kamera- und Beleuchtungseigenschaften sind die Bilder 105, 111 im Allgemeinen sehr unterschiedlich. Bezüglich der zweiten Aufnahme 105 ist dabei zu berücksichtigen, dass die Aufnahmesituation im Fahrzeug sehr speziell ist. Hier werden oft spezielle Kameras, beispielsweise Weitwinkelkameras, als Bilderfassungseinrichtungen eingesetzt sowie eine Beleuchtung im nicht-sichtbaren Bereich (NIR = near Infrared).

Ein den Vergleich im Block 116 durchführender vergleichender Algorithmus soll daher sehr tolerant sein, um nicht zu oft ein "false negative" (Zurückweisungen) zu produzieren oder auf die spezielle Aufnahmesituation trainiert sein. Im ersten Fall bedeutet dies jedoch eine erhöhte "False Positive"-Rate ("FP-rate'"). Im zweiten Fall einen Algorithmus, der genau auf die Situation zugeschnitten ist. Es entfällt somit die Nutzung der bestehenden leistungsstarken State-Of-The-Art Algorithmen. Ferner stellt der zweite Fall einen erheblichen Applikationsaufwand (Aufnahme von Bilddatenbanken und Training) dar.

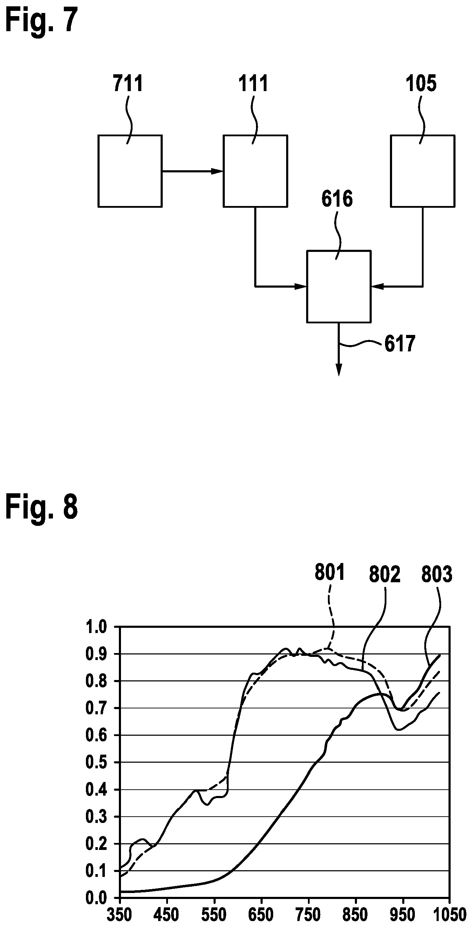

Fig. 7 zeigt ein Ablaufdiagramm eines Verfahrens gemäß einem Ausführungsbeispiel. Gezeigt ist eine erste Aufnahme 711 eines ersten Geräts und eine zweite Aufnahme 105 eines zweiten Geräts. Im Unterschied zu Fig. 6 wird die erste Aufnahme 711 zunächst einer Transformation unterzogen, um eine normalisierte Aufnahme 111 zu erhalten. Dabei bezieht sich die Normalisierung auf die Charakteristik des zweiten Geräts. Die anhand von Fig. 1 beschriebenen Plausibilisierungsdaten können die normalisierte Aufnahme 111 umfassen. Somit kann es sich bei dem ersten Gerät um das in Fig. 1 gezeigte mobile Gerät handeln. Die anhand von Fig. 1 beschriebenen Bilddaten können die zweite Aufnahme 105 umfassen. Somit kann es sich bei dem zweiten Gerät um die in Fig. 1 gezeigte Bilderfassungseinrichtung handeln. Die normalisierte Aufnahme 111 wird von dem ersten Gerät und die zweite Aufnahme 105 wird von dem zweiten Gerät an einen Block 616 übertragen, in dem ein Vergleich durch einen

Bildverarbeitungs-Algorithmus des zweiten Geräts durchgeführt wird. Eine Übertragung der ersten Aufnahme 111 erfolgt dabei über eine Schnittstelle. Ein Ergebnis 617 des Vergleichs wird von dem Block 616 ausgegeben. Wenn das Ergebnis 617 anzeigt, dass die Aufnahmen 105, 711 dieselbe Person abbilden, so kann das Ergebnis 617 von der in Fig. 1 gezeigten Bestimmungseinrichtung verwendet werden, um Insassendaten bezüglich dieser Person zu bestimmen. Gemäß einem Ausführungsbeispiel ist der Block 616 Teil der anhand von Fig. 1 beschriebenen Bestimmungseinrichtung.

Der anhand von Fig. 7 beschriebene Ansatz weist den Vorteil einer niedrigen "False Positive"-Rate sowie den Einsatz von herkömmlichen Klassifikations-Algorithmen auf. Dazu werden die Bilder, insbesondere das erste Bild 711 normalisiert. Das Bild 711 des mobilen Geräts wird einer Transformation (AB) unterworfen, welche die Charakteristik der Kamera des mobilen Gerätes (A) kennt und auf die Kamera des Fahrzeugsystems (B) umrechnet.

Vorteil dieses Verfahrens ist, dass ein bestehender leistungsstarker State-of-the-art Vergleichs-Algorithmus ohne aufwendiges Training genutzt werden kann, ohne dass die "False-Positive"-Rate erhöht wird.

Welche Art von Parametern kompensiert werden soll, wird im Folgenden diskutiert. Triviale Unterschiede z. B. leichte Unterschiede der Auflösung werden von heutigen Algorithmen ohne Probleme toleriert.

Von Bedeutung für die Leistungsfähigkeit sind jedoch spektrale Korrekturen und starke Verzeichnungen:
Fig. 8 zeigt eine Darstellung von Reflektanzeigenschaften menschlicher Hauttypen in verschiedenen Spektralbereichen gemäß einem Ausführungsbeispiel. Auf der Abszisse ist die Wellenlänge in Nanometern und auf der Ordinate die Reflektanz aufgetragen. Gezeigt ist ein in Asien verbreiteter Hauttyp 801, der in Nordeuropa verbreitete hellhäutige Hauttyp 802 und ein besonders dunkelhäutiger Hauttyp 803. (Quelle Fig. 8: A Generic Camera Calibration Method for Fish-Eye Lenses, Kannala, Brandt, 2004)

Während die Haut eines hellhäutigen Hauttyps 802 im sichtbaren Bereich deutlich heller (~8x) darstellt, als die eines besonders dunkelhäutiger (im Beispiel), ist sie im nicht-sichtbaren Bereich deutlich ähnlicher (nur ca. 2x heller). Diese Anpassung auf z.B ein NIR-System im Fahrzeug wird über die Transformation (AB) gewährleistet, durch die die erste Aufnahme in Fig. 7 in die normalisierte Aufnahme transformiert wird.

Die Reflektanzeigenschaften können einen Parameter darstellen, der bei der anhand von Fig. 7 beschriebenen Transformation berücksichtigt werden kann, um die erste Aufnahme zu normalisieren.

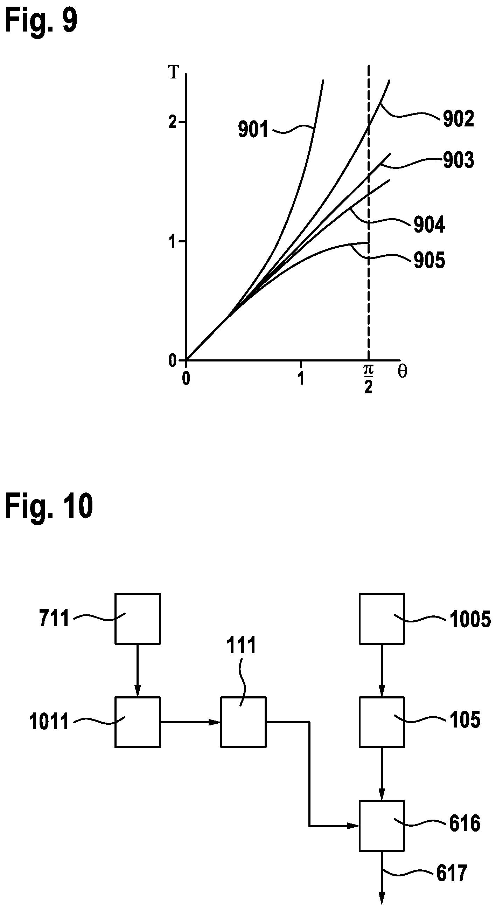

Fig. 9 zeigt eine Darstellung von geometrischen Verzerrungen unterschiedlicher Kameramodelle gemäß einem Ausführungsbeispiel. Gezeigt ist eine perspektivische Projektion 901, eine stereographische Projektion 902, eine äquidistante Projektion 903, eine equisolide Winkelprojektion 904 und eine orthogonale Projektion 905. (Quelle Fig. 9: Human Skin Detection by Visible and Near-Infrared Imaging, Kanzawa et al, 2011).

Gemäß einem Ausführungsbeispiel wird bei der anhand von Fig. 7 beschriebenen Transformation die geometrische Verzerrung des Bildes korrigiert. Die Unterschiede in Kameramodellen (das math. Kameramodell beschreibt z.B. die Verzerrungen zum Bildrand hin) selbst innerhalb der Klasse der weitwinkligen Charakteristiken können sehr stark sein.

Im Folgenden sind die Gleichungen zu den Kurven 901, 902, 903, 904, 905 gegeben. Phi, auf der Abszisse aufgetragen, ist der Einfallswinkel und r, auf der Ordinate aufgetragen, der Abstand des Bildpunktes zum "principal point". f ist die Brennweite.
Für die perspektivische Projektion 901 gilt: r = f tan (phi)
Für die stereographische Projektion 902 gilt: r = 2f tan(phi/2)
Für die äquidistante Projektion 903 gilt: r = f phi
Für die equisolide Winkelprojektion 904 gilt: r = 2f sin(phi2)
Für die orthogonale Projektion 905 gilt: r = f sin(phi)

Das verbreitetste Modell ist die Lockkamera mit der Kurve 901. Ist zum Beispiel das bildgebende System (A), also das in Bezug auf Fig. 7 die erste Aufnahme erzeugende Gerät, vom Typus 901 und das System (B), also das in Bezug auf Fig. 7 die zweite Aufnahme erzeugende Gerät, vom Typus 903, das einer im Fahrzeug einsetzbaren Weitwinkelkamera entspricht, so komprimiert die Transformation das erste Bild zu den Rändern hin deutlich.

Die Eingabedaten, um die Transformation durchzuführen, sind einfach zu gewinnen. Die Kameramodelle der Innenraumkamera selbst sind genau bekannt. Die Charakteristik der Bilder, die vom Smartphone übertragen werden, sind typischerweise weniger verzerrend als die der Innenraumkamera. Hier kann man mit typischen Werten arbeiten. Für die Charakteristik des Bildes vom Smartphone gibt es aber auch verschiedene Quellen für relevante Daten, um die Qualität der Transformation zu verbessern:
Im ersten Fall ist die erste Aufnahme mit dem Smartphone als mobiles Gerät direkt aufgezeichnet. Eine auf dem Smartphone ausgeführte Software, beispielsweise eine App, ermittelt die geometrischen Kameramodelle der Kamera des Smartphones (z. B. aus einer Serverdatenbank) und überträgt sie mit dem restlichen Datensatz, beispielsweise als Plausibilisierungsdaten, wie anhand von Fig. 1 beschrieben. Gemäß unterschiedlicher Ausführungsbeispiele kann die Transformation dann in dem Smartphone selbst oder in der in Fig. 1 gezeigten Bestimmungseinrichtung durchgeführt werden.

Im zweiten Fall ist die erste Aufnahme nicht mit diesem Smartphone aufgezeichnet. Eine Extraktion aus Bild-Metadaten kann durchgeführt werden. Moderne Kameras nutzen die Möglichkeit, digitale Bilder mit umfangreichen Metainformationen zu versehen. Meist werden Basisdaten der Kamera gespeichert. Die Standardisierung dieser Daten ist das sogenannte Exif Format (Exchangeable Image File Format). Hier können Aufnahmeparameter, Brennweite, Auflösung etc. kodiert werden.

Im dritten Fall handelt es sich bei der ersten Aufnahme um ein Bild unbekannter Herkunft ohne Meta-Datei. Hierbei kann eine Annahme einer typischen

Geometrie eventuell unterstützt mit einer Schätzung aus dem Bild selbst angewandt werden.

Fig. 10 zeigt ein Ablaufdiagramm eines Verfahrens gemäß einem Ausführungsbeispiel.

Gezeigt ist eine erste Aufnahme 711 eines ersten Geräts und eine zweite Aufnahme 1005 eines zweiten Geräts. Wie anhand von Fig. 7 beschrieben, wird die erste Aufnahme 711 zunächst einer Transformation unterzogen, um eine normalisierte Aufnahme 1011 zu erhalten. Dabei bezieht sich die Normalisierung auf die Charakteristik des zweiten Geräts. Im Unterschied zu Fig. 7 wird die normalisierte erste Aufnahme 1011 einer Merkmalsberechnung durch einen Bildverarbeitungsalgorithmus des ersten Geräts unterzogen, um erste Merkmalsparameter 111 der normalisieren Aufnahme 1011 zu erhalten. Die anhand von Fig. 1 beschriebenen Plausibilisierungsdaten können die ersten Merkmalsparameter 111 umfassen. Somit kann es sich bei dem ersten Gerät um das in Fig. 1 gezeigte mobile Gerät handeln. Im Unterschied zu Fig. 7 wird ferner die zweite Aufnahme 1005 einer Merkmalsberechnung durch einen Bildverarbeitungsalgorithmus des zweiten Geräts unterzogen, um zweite Merkmalsparameter 105 der zweiten Aufnahme 1005 zu erhalten. Die anhand von Fig. 1 beschriebenen Bilddaten können die zweiten Merkmalsparameter 105 umfassen. Somit kann es sich bei dem zweiten Gerät um die in Fig. 1 gezeigte Bilderfassungseinrichtung handeln. Die ersten Merkmalsparameter 111 werden von dem ersten Gerät und die zweiten Merkmalsparameter 105 werden von dem zweiten Gerät an einen Block 616 übertragen, in dem ein Vergleich durch einen Bildverarbeitungs-Algorithmus des zweiten Geräts durchgeführt wird. Eine Übertragung der ersten Aufnahme 111 erfolgt dabei über eine Schnittstelle. Ein Ergebnis 617 des Vergleichs wird von dem Block 616 ausgegeben. Wenn das Ergebnis 617 anzeigt, dass die Aufnahmen 711, 1005 dieselbe Person abbilden, so kann das Ergebnis 617 von der in Fig. 1 gezeigten Bestimmungseinrichtung verwendet werden, um Insassendaten bezüglich dieser Person zu bestimmen. Gemäß einem Ausführungsbeispiel ist der Block 616 Teil der anhand von Fig. 1 beschriebenen Bestimmungseinrichtung.

Die Übertragung zu dem Block 617 kann verschlüsselt erfolgen. Trotzdem liegt dann im Fahrzeug irgendwo ein vom Menschen identifizierbares Bild des Insassen vor. Ist dies nicht erwünscht, um die Privatsphäre zu schützen, kann das anhand von Fig. 10 beschriebene effiziente Verfahren genutzt werden.

Zieht man die Normalisierung, die zu dem normalisierten Bild 1011 führt, und die Feature-Berechnung, die zu den ersten Merkmalsparametern 111 führen, zusammen, können über die Schnittstelle zu dem Block 617 nur die Parameter 111, jedoch nicht die Bilder 711, 1011 übermittelt werden. Aus den Parametern 111 lässt sich das Gesicht des Nutzers nicht rekonstruieren.

Vorteilhafterweise sind auf diese Weise zu keinem Zeitpunkt Daten im Fahrzeug, die eindeutige Rückschlüsse auf den Insassen zulassen. Die Übertragung der Parameter111 anstelle der Bilder 711, 1011 spart darüber hinaus Bandbreite.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren zum Bereitstellen einer Insasseninformation für eine Sicherheitseinrichtung (106) für ein Fahrzeug (102), wobei das Verfahren die folgenden Schritte umfasst:
Einlesen (201) von einen Insassen (108) des Fahrzeugs (102) repräsentierenden Bilddaten (105) über eine Schnittstelle einer Bestimmungseinrichtung (116) zu einer Bilderfassungseinrichtung (104) des Fahrzeugs (102), wobei die Bilddaten (105) Merkmalsparameter einer Aufnahme (1005) des Insassen (108) durch die Bilderfassungseinrichtung (104) umfassen;
Ermitteln von Plausibilisierungsdaten (111) unter Verwendung einer Aufnahme (711) einer Person (108) durch ein mobiles Gerät (110), wobei die die Person (108) repräsentierende Aufnahme (711) unter Verwendung der Charakteristik der Bilderfassungseinrichtung (104) zu einer normalisierten Aufnahme (1011) normalisiert wird, indem die Aufnahme (711) des mobilen Geräts (110) einer Transformation unterworfen wird, welche eine Charakteristik einer Kamera des mobilen Gerätes (110) kennt und auf die Bilderfassungseinrichtung (104) umrechnet, wobei die Plausibilisierungsdaten (111) als Merkmalsparameter der normalisierten Aufnahme (1011) ermittelt werden, aus denen sich das Gesicht des Insassen (108) nicht rekonstruieren lässt, wobei die normalisierte Aufnahme (1011) einer Merkmalsberechnung durch einen Bildverarbeitungsalgorithmus des mobilen Geräts (110) unterzogen wird, um die Merkmalsparameter der normalisierten Aufnahme (1011) zu erhalten;
Einlesen (203) der die Person (108) repräsentierenden Plausibilisierungsdaten (111) über eine Schnittstelle der Bestimmungseinrichtung (116);
Bestimmen (205) von den Insassen (108) charakterisierenden Insassendaten (117) durch die Bestimmungseinrichtung (116), nach einer erfolgreichen Plausibilisierung der Bilddaten durch die Plausibilisierungsdaten, wobei die Plausibilisierung erfolgreich sein wird, wenn ein Ergebnis (617) eines Vergleichs der Merkmalsparameter der Aufnahme (1005) mit den Merkmalsparametern der Plausibilisierungsdaten (111) anzeigt, dass die Person (108) mit dem Insassen (108) übereinstimmt; und
Anfordern eine weitere Person (108, 120) repräsentierender weiterer Plausibilisierungsdaten (122), wenn im Schritt des Bestimmens (205) die Insassendaten (117) unter Verwendung der Bilddaten (105) und der Plausibilisierungsdaten (111) nicht bestimmt werden können, und mit einem wiederholten Schritt des Bestimmens (205) der Insassendaten (117) unter Verwendung der weiteren Plausibilisierungsdaten (122); und
Bereitstellen (207) der Insassendaten (117) an eine Schnittstelle zu der Sicherheitseinrichtung (106) für das Fahrzeug (102).

2. Verfahren gemäß Anspruch 1, bei dem im Schritt des Einlesens (203) der Plausibilisierungsdaten (111) die weitere Person (120) repräsentierende weitere Plausibilisierungsdaten (122) über die Schnittstelle der Bestimmungseinrichtung (116) eingelesen werden und im Schritt des Bestimmens (205) die Insassendaten (117) ferner unter Verwendung der weiteren Plausibilisierungsdaten (122) bestimmt werden.

3. Verfahren gemäß einem der vorangegangenen Ansprüche, mit einem Schritt des Anpassens der Sicherheitseinrichtung (106) unter Verwendung der Insassendaten (117).

4. Vorrichtung (100), umfassend Einleseeinrichtungen (112, 114), eine Bestimmungseinrichtung (116) und eine Bereitstellungseinrichtung (118), zum Bereitstellen einer Insasseninformation für eine Sicherheitseinrichtung (106) für ein Fahrzeug (102), die eingerichtet ist, das Verfahren gemäß einem der vorangegangenen Ansprüche auszuführen.

5. Computerprogramm, das dazu eingerichtet ist, das Verfahren gemäß einem der vorangegangenen Ansprüche auszuführen.

6. Maschinenlesbares Speichermedium, auf dem das Computerprogramm nach Anspruch 5 gespeichert ist.

## Claims

1. Method for providing occupant information for a safety device (106) for a vehicle (102), the method comprising the following steps:
reading in (201) image data (105) representing an occupant (108) of the vehicle (102) via an interface of a determining device (116) to an image capturing device (104) of the vehicle (102), wherein the image data (105) comprise feature parameters of a recording (1005) of the occupant (108) by means of the image capturing device (104);
ascertaining plausibility check data (111) using a recording (711) of a person (108) by means of a mobile device (110), wherein the recording (711) representing the person (108) is normalized to form a normalized recording (1011) using the characteristic of the image capturing device (104) by virtue of the fact that the recording (711) of the mobile device (110) is subjected to a transformation which knows a characteristic of a camera of the mobile device (110) and converts it to the image capturing device (104), wherein the plausibility check data (111) are ascertained as feature parameters of the normalized recording (1011) from which the face of the occupant (108) cannot be reconstructed, wherein the normalized recording (1011) is subjected to a feature calculation by means of an image processing algorithm of the mobile device (110) in order to obtain the feature parameters of the normalized recording (1011);
reading in (203) the plausibility check data (111) representing the person (108) via an interface of the determining device (116);
determining (205) occupant data (117) characterizing the occupant (108) by means of the determining device (116), after a successful plausibility check of the image data by means of the plausibility check data, wherein the plausibility check will be successful if a result (617) of a comparison of the feature parameters of the recording (1005) with the feature parameters of the plausibility check data (111) indicates that the person (108) corresponds to the occupant (108); and
requesting further plausibility check data (122) representing a further person (108, 120) if, in the step of determining (205), the occupant data (117) cannot be determined using the image data (105) and the plausibility check data (111), and comprising a repeated step of determining (205) the occupant data (117) using the further plausibility check data (122); and
providing (207) the occupant data (117) to an interface to the safety device (106) for the vehicle (102).

2. Method according to Claim 1, in which, in the step of reading in (203) the plausibility check data (111), further plausibility check data (122) representing the further person (120) are read in via the interface of the determining device (116) and, in the step of determining (205), the occupant data (117) are furthermore determined using the further plausibility check data (122).

3. Method according to either of the preceding claims, comprising a step of adapting the safety device (106) using the occupant data (117).

4. Apparatus (100), comprising read-in devices (112, 114), a determining device (116) and a providing device (118), for providing occupant information for a safety device (106) for a vehicle (102), which is configured to carry out the method according to any of the preceding claims.

5. Computer program which is configured to carry out the method according to any of the preceding claims.

6. Machine-readable storage medium on which the computer program according to Claim 5 is stored.

## Revendications

1. Procédé pour fournir des informations passager à un dispositif de sécurité (106) destiné à un véhicule (102), le procédé comprenant les étapes suivantes :
lecture (201) de données d'image (105) représentant un passager (108) du véhicule (102) par l'intermédiaire d'une interface d'un dispositif de détermination (116) vers un dispositif de détection d'image (104) du véhicule (102), les données d'image (105) comprenant des paramètres de caractéristiques d'une capture (1005) du passager (108) par le dispositif de détection d'image (104) ;
détermination de données de plausibilité (111) par utilisation d'une capture (711) d'une personne (108) par un appareil mobile (110), la capture (711) qui représente la personne (108) étant normalisée en une capture normalisée (1011) par utilisation de la caractéristique du dispositif de détection d'image (104), en soumettant la capture (711) de l'appareil mobile (110) à une transformation qui connaît une caractéristique d'une caméra de l'appareil mobile (110) et la convertit pour le dispositif de détection d'image (104), les données de plausibilité (111) étant déterminées comme étant des paramètres de caractéristiques de la capture normalisée (1011) à partir desquels le visage du passager (108) ne peut pas être reconstruit, la capture normalisée (1011) étant soumise à un calcul de caractéristiques par un algorithme de traitement d'image de l'appareil mobile (110) pour obtenir les paramètres de caractéristiques de la capture normalisée (1011) ;
lecture (203) des données de plausibilité (111) représentant la personne (108) par l'intermédiaire d'une interface du dispositif de détermination (116) ;
détermination (205) de données de passager (117) caractérisant le passager (108) par le dispositif de détermination (116), après une plausibilisation réussie des données d'image par les données de plausibilité, la plausibilisation étant réussie si un résultat (617) d'une comparaison des paramètres de caractéristiques de la capture (1005) avec les paramètres de caractéristiques des données de plausibilité (111) indique que la personne (108) correspond au passager (108) ; et
demande de données de plausibilité supplémentaires (122) représentant une autre personne (108, 120) si, lors de l'étape de détermination (205), les données de passager (117) ne peuvent pas être déterminées par utilisation des données d'image (105) et des données de plausibilité (111), et répétition de l'étape de détermination (205) des données de passager (117) par utilisation des données de plausibilité supplémentaires (122) ; et
fourniture (207) des données de passager (117) à une interface vers le dispositif de sécurité (106) destiné au véhicule (102).

2. Procédé selon la revendication 1, dans lequel, lors de l'étape de lecture (203) des données de plausibilité (111), des données de plausibilité supplémentaires (122) représentant une autre personne (120) sont lues par l'intermédiaire de l'interface du dispositif de détermination (116) et, lors de l'étape de détermination (205), les données de passager (117) sont en outre déterminées par utilisation des données de plausibilité supplémentaires (122).

3. Procédé selon l'une des revendications précédentes, comprenant une étape d'adaptation du dispositif de sécurité (106) par utilisation des données de passager (117).

4. Dispositif (100), comprenant des dispositifs de lecture (112, 114), un dispositif de détermination (116) et un dispositif de fourniture (118), servant à fournir des informations passager à un dispositif de sécurité (106) destiné à un véhicule (102), qui est configuré pour mettre en œuvre le procédé selon l'une des revendications précédentes.

5. Programme informatique, qui est conçu pour mettre en œuvre le procédé selon l'une des revendications précédentes.

6. Support de stockage lisible par machine, sur lequel est stocké le programme informatique selon la revendication 5.
